# EUROPEAN PATENT APPLICATION

(11) **EP 1 619 901 A2**
(43) Date of publication of application: **25.01.2006**
(21) Application number: 05254532.4
(22) Date of filing: 20.07.2005
(51) Int. Cl.: H04N 7/26, H04N 7/50

(54) **Context adaptive binary arithmetic coding with reduced complexity**

(30) Priority: 22.07.2004 KR 2004057161
(71) Applicant: Samsung Electronics Co, Ltd, Suwon-si, Gyeonggi-do (KR)
(72) Inventor: Shim, Woo-sung, c/o 116-606 Byucksan Apt., Suwon-si, Gyeonggi-do (KR); Lobo, Austin, c/o 147-601 Hwanggolmacul 1-danji, Suwon-si, Gyeonggi-do (KR); Kim, Jung-woo, c/o 108-504 LG Apt., Seoul (KR)
(74) Representative: Brandon, Paul Laurence

(57) **Abstract**

There are provided a method of context adaptive binary arithmetic coding (CABAC) and an apparatus of the same. The CABAC method includes generating a plurality of syntax elements respectively corresponding to a plurality of predetermined sized residual blocks included in an input block; grouping flags of each of the residual blocks which indicate whether a non-zero transform coefficient exists among the syntax elements; and context adaptive binary arithmetic coding the grouped flags. The complexity of context adaptive binary arithmetic coding is reduced, thereby performing context adaptive binary arithmetic coding more quickly and easily.

## Description

The present Invention relates to coding methods, in particular to context adaptive binary arithmetic coding (CABAC) methods, and to coding apparatus.

Since moving images contain a large amount of data, compression coding is convenient when storing or transmitting image data. Coding or decoding of image data is performed in units having varying sizes, for example, a macro block having 16x16 pixels or a block having 8x8 pixels.

Video compression coding standard called MPEG-4 Part 10 advanced video coding (AVC) or ITU-T H.264 has been developed. As new communication channels become available, for example, a mobile communication network, H.264 was developed In order to switch a conventional circult switching system to a packet switching system and to cope with varied communication infrastructures.

H.264 is a video compression coding standard having a coding efficiency that is 50% greater than MPEG-4 Part 2. a conventional standard. Considering the rapidly changing wireless environment and internet environment, H,264 is robust against errors and is now starting to see wide spread use in networks.

H.264 employs various data compression methods for image data compression. One of the data compression methods is context adaptive binary arithmetic coding (CABAC). CABAC is a method of entropy encoding, which compresses data using symbol occurrence probability.

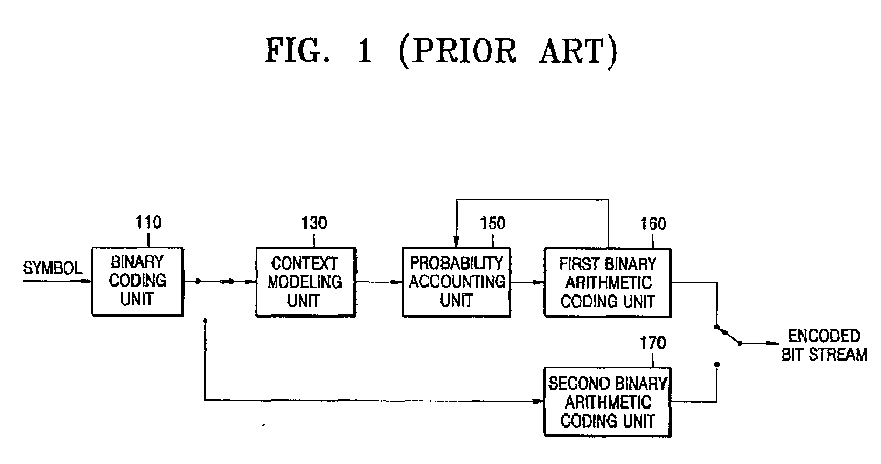

FIG. 1 is a block diagram of a conventional CABAC encoding apparatus. The CABAC apparatus of FIG. 1 operates according to the H.264 standard. The CABAC apparatus includes a binary coding unit 110, a context modeling unit 130, a probability accounting unit 150, a first binary arithmetic coding unit 160, and a second binary arithmetic coding unit 170.

The binary coding unit 110 performs conventional variable length coding, i.e., it outputs a binary value corresponding to an inputted symbol, referring to a predetermined variable length coding table which is previously stored. The context modeling unit 130 stores a plurality of probability tables, selects a probability table and uses the selected probability table to arlthmetically code the binary value received from the binary coding unit 110, and outputs an index value to the probability accounting unit 150.

The probability accounting unit 150 determines the probability value of symbols used for arithmetic coding, referring to the index value of the probability table inputted from the context modeling unit 130. The probability accounting unit 150 outputs the probability value of the symbols and the binary value output from the binary coding unit 110 to the first binary arithmetic coding unit 160. The first binary arithmetic coding unit 160 receives the probability value of the symbols and the binary value output from the binary coding unit 110 to generate a bit stream.

On the other hand, if an inputted symbol does not require a context modeling process, the inputted symbol is provided to the second binary arithmetic coding unit 170 after being binary coded by the binary coding unit 110.

According to the H.264 standard, a residual block and information of motion estimation information are CABACed by the apparatus of FIG. 1, thereby generating a final bit stream. The residual block includes a difference between pixel values of an original block and pixel values of a regeneration block. The regeneration block obtains a motion vector via estimating motion of the original block and regenerates the original block using the obtained motion vector.

H.264 performs discrete cosine transform (DCT) on 4×4 residual blocks and generates each of a plurality of syntax elements as 4×4 residual blocks. The syntax elements of the 4×4 residual blocks, which are defined by H.264 as coded_brock_flag, significant_coeff_flag[i]. and coeff_sign_flag[I]. The element coded_block_flag indicates whether a non-zero transform coefficient value exists among 16 pixel values of a present 4×4 residual block. The element significant_coeff_flag[i] indicates whether a transform coefficient value of i-th pixel of 16 pixel positions is 0. The element coeff_sign_flag[i] indicates a sign of a transform coefficient value of an I-th pixel, which is not 0. The elements coded_block_flag, the significant_coeff_flag[i], and the coeft_sign_flag[i] have lengths of 1 bit, respectively.

When the conventional CABAC described above is performed, a context modeling process performed by the context modeling unit 130 is very complicated. Particularly, a bottleneck situation occurs In the entire CABAC process, caused by a context modeling process of the element coded_block_flag of syntax elements of the 4×4 residual blocks described above.

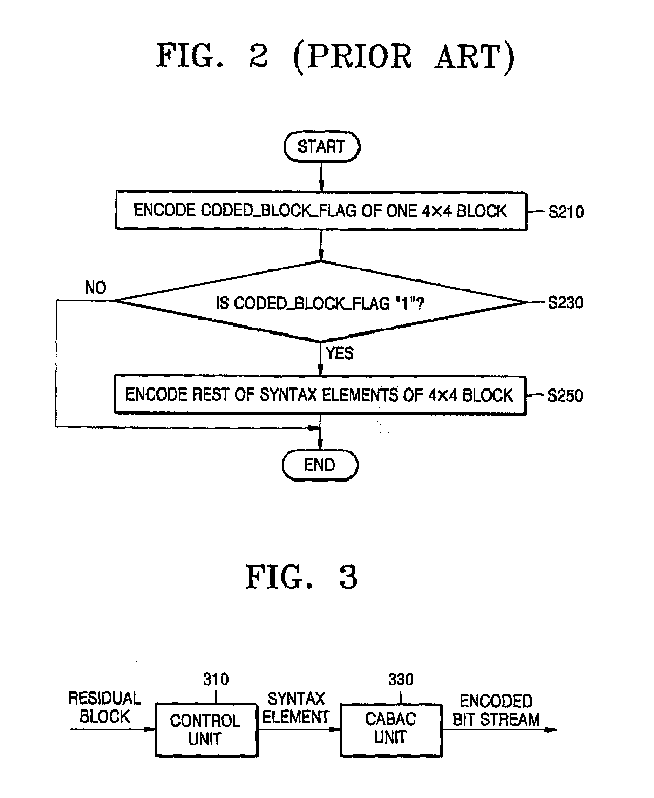

FIG. 2 is a flow chart illustrating a process of coding syntax elements of one of the sixteen 4×4 blocks included in a present macroblock. After performing DCT on one of the 4×4 blocks and after the syntax elements described above are generated, 1bit of the element coded_block_flag is encoded (S210). Next, when the value of the element coded_block_flag is "1" (S230), the rest of the syntax elements of the 4×4 blocks are encoded (S250). Here, the encoding includes CABAC.

In the 4×4 blocks, the elements significant_coeff_flag and coeff_sign_flag are allotted to each pixel by 1bit, and thus, each have a maximum length of 16 bits. In S250, the 16 significant_coeff_flag elements and the 16 coeff_sign_flag elements generated in one of the 4×4 blocks are grouped by the same kind of information and then encoded. On the other hand, in each of the sixteen 4×4 blocks included in the present macroblock, 16 sixteen coded_block_flags are generated but are not grouped and encoded, thereby causing a bottleneck situation In the entire CABAC process.

It is an aim of preferred embodiments of the present invention to provide a method and apparatus in which the complexity of context adaptive binary arithmetic coding is reduced, to allow and quick context adaptive binary arithmetic coding.

According to a first aspect of the present invention, there is provided a context adaptive binary arithmetic coding method including the operations of: generating a plurality of syntax elements respectively corresponding to a plurality of predetermined sized residual blocks included in an input block; grouping flags of each of the residual blocks which indicate whether a non-zero transform coefficient exists among the syntax elements; and context adaptive binary arithmetic coding the grouped flags.

According to a second aspect of the present invention, there is provided a coding method comprising: generating a plurality of syntax elements of residual block(s); grouping flags of the plurality of syntax elements; and coding the grouped flags.

According to a third aspect of the present invention, there is provided a context adaptive binary arithmetic coding apparatus including: a control unit which generates a plurality of syntax elements respectively corresponding to a plurality of predetermined sized residual blocks included in an Input block, groups flags of each of the residual blocks which indicate whether a transform coefficient which is not "0" exists among the syntax elements, and outputs the grouped flags; and a context adaptive binary arithmetic coding unit which context adaptive binary arithmetic codes the grouped flags.

According to a fourth aspect of the present invention, there Is provided a coding apparatus comprising: a control unit which is arranged in use to generate a plurality of syntax elements corresponding to a plurality of residual blocks, and to group flags of each of the residual blocks; and a coding unit which is arranged in use to code the grouped flags.

According to still a fifth aspect of the present invention, there is provided a computer readable recording medium In which a program executing a context adaptive binary arithmetic coding method is recorded, the method including the operations of: generating a plurality of syntax elements respectively corresponding to a plurality of predetermined sized residual blocks included in an input block; grouping flags of each of the residual blocks which indicate whether a non-zero transform coefficient exists among the syntax elements; and context adaptive binary arithmetic coding the grouped flags.

According to a sixth aspect of the present invention, there is provided a computer readable recording medium comprising instructions arranged to control a computer to execute a context adaptive binary arithmetic coding method, the method comprising: generating a plurality of syntax elements respectively corresponding to a plurality of predetermined sized residual blocks; grouping flags of each of the residual blocks which indicate whether a non-zero transform coefficient exists among the syntax elements; and context adaptive binary arithmetic coding the grouped flags.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example. to the accompanying diagrammatic drawings in which:

FIG. 1 is a block diagram of a conventional context adaptive binary arithmetic coding (CABAC) apparatus;
FIG. 2 is a flow chart illustrating a conventional process of coding syntax elements of one of a plurality of 4×4 blocks included in a present macroblock;
FIG. 3 is a block diagram of a CABAC apparatus according to an embodiment of the present invention: and
FIG. 4 is a flow chart illustrating a CABAC method according to an embodiment of the present invention.

In an embodiment of the present invention, coded_block_flag generated one by one by 4×4 residual blocks are grouped in units of residual macroblocks and encoded together.

FIG.3 is a block diagram of a context adaptive binary arithmetic coding (CABAC) apparatus according to an embodiment of the present invention. Referring to FIG. 3, the CABAC apparatus includes a control unit 310 and a CABAC unit 330.

When performing discrete cosine transformation (DCT) on a present residual macroblock in units of 4×4 residual blocks is finished, the control unit 310 receives DCT coefficient values of the 4×4 residual blocks and generates a plurality of syntax elements for each of the 4×4 residual blocks. The syntax elements are coded_block_flag, significant_coeff_flag[i], coeff_sign_flag[I], last_significant_coeff_flag[i], and coeff_abs_level_minus_1[i]. The element coded_block_flag indicates whether a non-zero transform coefficient value exists among 16 pixel values of a present 4×4 residual block. The element signlficant_coeff_flag[i] indicates whether a transform coefficient value of an I-th pixel among 16 pixel positions is 0. The element coeff_sign_flag[i] Indicates the sign of a transform coefficient value of an i-th pixel that is not 0. The element last_significant_coeff_flag[1] indicates whether an i-th pixel among 16 pixel positions is the last non-zero transform coefficient. The element coeff_abs_level_minus_1[i] indicates a value, which is obtained by subtracting 1 from the absolute value of the last non-zero transform coefficient of the i-th pixel,

The element coded_block_flag, the element significant_coeff_flag[i], the element coeff_sign_flag[i], and the element last_significant_coeff_flag[i] each have length of 1 bit. The length of coeff_abs_level_minus_1[i] varies according to the type of value.

The control unit 310 groups a plurality of the coded_block_flag syntax element and outputs the grouped flags to the CABAC unit 330.

The CABAC unit 330 receives the grouped flags and performs CABAC on them. Then, the CABAC unit 330 receives the rest of a plurality of the syntax elements and performs CABAC on them.

A CABAC method according to an embodiment of the present invention will now be described in detail based on the configuration of the CABAC apparatus of FIG. 3.

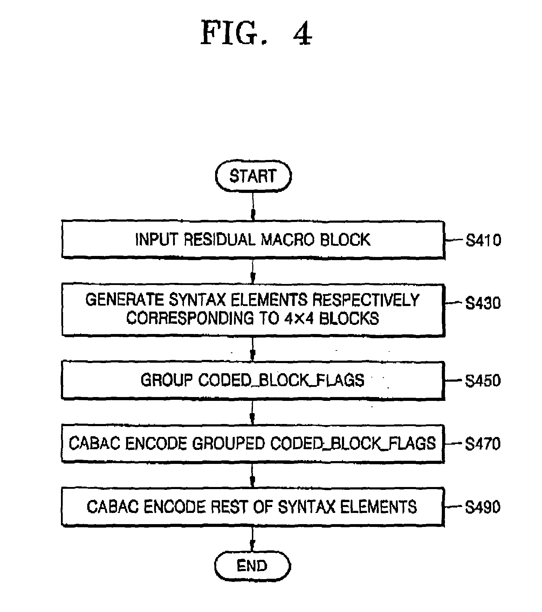

FIG. 4 is a flow chart illustrating the CABAC method according to an embodiment of the present invention.

In an embodiment of the present invention, an entire encoding process is performed in units of 16×16 sized macroblocks. The DCT and the generation of the syntax elements for residual data such as coded_block_flag, significant_coeff_flag[i]. last_significant_coeff_flag[i], coeff_abs_level_minus_1[i], and coeff_sign_flag[i] are performed in units of 4x4 blocks.

When performing the DCT on the present residual macroblock in units of the 4×4 residual blocks Is finished, the control unit 310 receives DCT coefficient values of the 4x4 residual blocks (S410) and generates syntax elements such as coded_block_flag, significant_coeff_flag[i], last_significant_coeff_flag[i], coeff_abs_level_minus_1[i], and coeff_sign_flag[i] (S430).

Since the present residual macroblock includes sixteen 4×4 luma residual blocks, one 4×4 luma DC residual block, two 2×2 chroma DC residual blocks, and eight 4×4 chroma AC residual blocks, the elements coded_block_flag of the present macroblock have a maximum value of 27. The control unit 310 groups a plurality of the coded_block_flags (S450).

The control unit 310 outputs the grouped coded_block_flags to the CABAC unit 330. The CABAC unit 330 receives the grouped coded_block_flags and performs CABAC on them (S470). According to a conventional art, the coded_block_flag elements are not grouped and separated and encoded by 1bit, thereby increasing the complexity of the CABAC process. However, in the Figure 4 embodiment, a plurality of coded_block_flag elements of the present macroblock are grouped together and the CABAC is performed together, thereby reducing the complexity of the CABAC process.

On the other hand, In a context modelling process, the most proper probability table for the CABAC of an input symbol, the coded-block_flag, is selected from a plurality of probability tables. In order to select the most proper probability table for the CABAC of the Input symbol, pattern information of blocks located around the present 4x4 residual blocks and information of the syntax elements such as coded_block_flag are required. Reference blocks for context modelling the element coded_block_flag related to the present 4x4 residual blocks are 4×4 blocks above the present 4x4 residual blocks, 4x4 blocks to the left of the present 4x4 residual blocks, a macroblock above the present residual macroblock in which the present 4×4 residual blocks are included, and macroblocks to the left of the present residual macroblock.

Accordingly, when the coded_block_flags are not grouped and are separated from each other by 1bit to perform the CABAC according to a conventional art. for the context modelling process, the pattern information and information of the syntax elements such as coded_block_flag of the 4×4 blocks above the present 4×4 residual blocks, the 4x4 blocks to the left of the present 4x4 residual blocks, the macroblock above the present residual macroblock in which the present 4x4 residual blocks are included, and the macroblock to the left of the present residual macroblock are retrieved and read. However, in the Figure 4 embodiment, a plurality of coded_block_flag elements related to the present macroblock is grouped and are CABACed together, thereby reducing the complexity of the context modelling process. For example, the pattern Information and information of the syntax elements such as the coded_block_flag of the macroblock above the present residual macroblock and the macroblock to the left of the present residual macroblock are retrieved, read, and stored once. Therefore, there is no need to retrieve and read such information each time.

After the CABAC unit 330 performs CABAC on the grouped coded_block_flag elements according to S470, the rest of the syntax elements except the coded_block_flag elements are inputted from the control unit 310 to be CABACed (S490).

As described above, in an embodiment of the present invention, as an example, 16×16 macroblocks are inputted to DCT in units of 4×4 blocks, and syntax elements are encoded. However, the size of a block is not restricted to 16×16 macroblocks or 4×4 blocks. It is understood that macroblocks can be M × N macroblocks (M=N or M ≠ N, positive integer), or macroblocks can be any predetermined shape, and changes may be made accordingly without departing from the principles of the invention.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the scope of the present invention as defined by the claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The Invention is not restricted to the details of the foregoing embodiment(s). The Invention extends to any novel one, or any novel combination, of the features disclosed in this specification (Including any accompanying claims, abstract and drawings), or to any novel one, or any novel combination, of the steps of any method or process so disclosed.

## Claims

1. A coding method comprising:
generating a plurality of syntax elements of residual block(s) (S430);
grouping flags of the plurality of syntax elements (S450); and
coding the grouped flags (S470).

2. The method of claim 1, further comprising: coding the rest of the plurality of syntax elements not coded as group flags.

3. The method of claim 1, or 2 wherein the residual block(s) comprises a MxN pixel block.

4. The method of claim 3, wherein M=N and M and N are integers.

5. The method of claim 4, wherein the residual block(s) comprises a 4x4 pixel block.

6. The method of any preceding claim, wherein the flag indicates whether a non-zero transform coefficient exists among the syntax elements.

7. The method of claim 1 or 2, wherein the residual block(s) comprises a macro block.

8. The method of claim 7, wherein the macro block comprises a K×L macro block.

9. The method of claim 8, wherein K = L and K and L are integers.

10. The method of claim 7 or 8, wherein the K×L macro block is a 16×16 macro block.

11. The method of any preceding claim, wherein the coding is context adaptive binary arithmetic coding.

12. A coding apparatus comprising:
a control unit (310) which is arranged in use to generate a plurality of syntax elements corresponding to a plurality of residual blocks, and to groups flags of each of the residual blocks: and
a coding unit (330) which is arranged In use to code the grouped flags.

13. The apparatus of claim 12, wherein coding unit (330) receives the rest of a plurality of the syntax elements except the flags, and is arranged to code the rest of the syntax elements.

14. The apparatus of claim 12 or 13, wherein the residual block comprises a M×N pixel block.

15. The apparatus of claim 14, wherein M and N are integers and M = N.

16. The apparatus of claim 15, wherein the residual block comprises a 4×4 pixel block.

17. The apparatus of claim 12, wherein the flags indicating whether a non-zero transform coefficient exist among the syntax elements.

18. The apparatus of claim 12 or 13, wherein the residual block comprises a macro block.

19. The apparatus of claim 18, wherein the macro block is a KxL macro block.

20. The method of claim 19, wherein K and L are integers and K = N.

21. The method of claim 20, wherein the K×L macro block is a 16x16 macro block.

22. The apparatus of any one of claims 12 - 21, wherein the coding unit is arranged to perform a context adaptive binary arithmetic coding.

23. A computer readable recording medium comprising instructions arranged to control a computer to execute a context adaptive binary arithmetic coding method, the method comprising:
generating a plurality of syntax elements respectively corresponding to a plurality of predetermined sized residual blocks (S430);
grouping flags of each of the residual blocks which Indicate whether a non-zero transform coefficient exists among the syntax elements (S450); and
context adaptive binary arithmetic coding the grouped flags (S470).

24. The computer readable recording of claim 23, the method further comprising the operation of context adaptive binary arithmetic coding the rest of the plurality of the syntax elements except the flags after the operation of context adaptive binary arithmetic coding the grouped flags.

25. The computer readable recording medium of claim 24, wherein the residual block is a 4×4 pixel block.
